# FASCICULE DE BREVET EUROPEEN

(11) **EP 0 968 873 B1**
(45) Date de publication et mention de la délivrance du brevet: **26.10.2011**
(21) Numéro de dépôt: 99401650.9
(22) Date de dépôt: 01.07.1999
(51) Int. Cl.: B60L 11/00, B60M 7/00

(54) **Réseau de transport en commun avec véhicules électriques**
Öffentliches Verkehrsnetz mit elektrischen Fahrzeugen
Public transport net with electric vehicles

(30) Priorité: 02.07.1998 FR 9808469
(43) Date de publication de la demande: 05.01.2000
(73) Titulaire: Bombardier Transportation GmbH, 10785 Berlin (DE)
(72) Inventeur: Van Berten, Philippe, 59990 Preseau (FR)
(74) Mandataire: Broydé, Marc

(56) Documents cités:
- EP-A- 0 744 809
- DE-A- 2 405 198
- DE-A- 3 101 655
- FR-A- 2 336 272
- BAUDRY P ET AL: "Applications of solid state electrolyte generators for electric utilities" ELECTROCHIM ACTA;ELECTROCHIMICA ACTA JUL 1992, vol. 37, no. 9, juillet 1992 (1992-07), pages 1627-1629, XP002096983

## Description

La présente invention concerne un réseau de transport en commun constitué de véhicules à propulsion électrique circulant sur des itinéraires définis et bordés de stations d'arrêt.

Il est de plus en plus fréquent de réaliser des réseaux ou des lignes de transport en commun urbains constitués de véhicules type tramway ou trolleybus fonctionnant grâce à un mode électrique de propulsion du type par exemple moteur asynchrone. Les moteurs électriques de tels véhicules sont alimentés par liaison avec une infrastructure fixe composée de caténaires ou de rails sous tension électrique.

L'avantage en exploitation de tels réseaux ou lignes réside dans une réduction de la pollution atmosphérique et des nuisances sonores par rapport aux modes de propulsion diesel ou essence.

Or, cette solution présente de nombreux inconvénients dont le coût prohibitif de la pose et de l'entretien des caténaires ou des rails d'alimentation électrique. Une infrastructure type caténaire, pesante, génère une pollution autre qu'atmosphérique ou sonore mais de type visuel cette fois.

On peut envisager une captation d'électricité par le sol en utilisant des rails associés avec des frotteurs en caniveau par exemple. Mais mettre en place une déviation de la ligne entre deux stations par exemple lors de l'intervention sur la chaussée des services techniques des réseaux de gaz ou d'électricité est difficilement envisageable pour des raisons de coûts et de délais que soit dans le cas de l'utilisation de rails ou même de caténaires car dans ces cas, il faudrait reporter l'ensemble des installations d'alimentation électrique précité sur le nouvel itinéraire.

On a déjà proposé d'embarquer des batteries d'accumulateurs à bord des véhicules comme source d'énergie de traction mais on se heurte alors aux problèmes de rechargement lent et fastidieux de ces accumulateurs, à leur lourdeur ainsi qu'à leur capacité limitée.

On connaît, par les documents FR 2 336 272 ou DE 24 05 198 un réseau de transport en commun constitué par un ensemble de véhicules de transport en commun circulant sur une ou plusieurs lignes, ces véhicules ayant au moins un moyen de propulsion électrique alimenté par une batterie d'accumulateurs d'énergie électrique ; le réseau comprend également des stations d'arrêt bordant les lignes au voisinage desquelles lesdits véhicules de transport sont susceptibles de s'arrêter, certaines des stations comportent un dispositif d'alimentation électrique ; chaque véhicule comporte des moyens de coopération avec le dispositif d'alimentation des stations d'arrêt pour la recharge rapide totale ou partielle des accumulateurs.

Dans ces documents qui paraissent bien théoriques, les accumulateurs des véhicules électriques sont des accumulateurs nickel-cadmium, et bien qu'il soit dit que la recharge effectuée en station est rapide, rien ne permet en pratique de réaliser une telle recharge ce qui pourrait expliquer pourquoi ces propositions déjà anciennes ne semblent pas avoir abouti.

Le but de l'invention est de trouver une solution à ce problème de la recharge rapide en station.

L'invention atteint son but dans le cadre d'un réseau selon la revendication 1, du fait que, d'une part, les accumulateurs des véhicules sont des super-capacités, et en ce que, d'autre part, les dispositifs d'alimentation en station comprennent eux-mêmes une ou plusieurs super-capacités alimentées par le réseau électrique et permettant une restitution rapide de leur énergie emmagasinée.

En ce qui concerne les super-capacités, on peut se référer en particulier aux articles de M. Xavier Andrieu: "Les super-capacités, état des réalisations et applications aux transmissions hybrides" paru lors de la journée spécialisée INRETS du 14 mai 1998 et "Principe, caractéristiques et applications des super-capacités" paru à l'EPF'96-Grenoble, ainsi qu'au texte du brevet US 2 800 616 A de M. H.J.Becker. Les super-capacités se comportent d'une manière générale comme de très gros condensateurs et sont capables par exemple d'emmagasiner 47 Wh avec une capacité de 18 Farads sous 135 Volts. A volume égal, la capacité d'une super-capacité est ainsi avantageusement bien supérieure à celle des condensateurs diélectriques traditionnels. La constitution d'une super-capacité peut être voisine de celle d'un accumulateur électrochimique et comporte deux électrodes et un électrolyte.

De préférence, les moyens de coopération comprennent avantageusement au niveau des véhicules un ou plusieurs organes conducteurs de liaison avec le ou les rails ou caténaires placés au niveau de certaines stations d'arrêt, ces organes conducteurs de liaison étant adaptés pour entrer en contact électrique et physique avec le ou lesdits rails ou caténaires placés au niveau de certaines stations d'arrêt.

Selon une autre caractéristique de la présente invention, les organes conducteurs de liaison appartenant aux moyens de coopération sont du type pantographe ou frotteur.

Selon une autre caractéristique de la présente invention, chaque dispositif d'alimentation électrique offre une puissance correspondant à l'énergie dissipée par chaque véhicule, en particulier sous forme d'énergie de traction, sur une durée d'un tiers du temps de trajet entre les deux stations d'arrêt précédentes équipées de tels dispositifs d'alimentation électrique. Ainsi, l'énergie électrique transférée par le dispositif d'alimentation vers les super-capacités d'un véhicule vient compenser la perte en énergie électrique de ces super-capacités lors du parcours dudit véhicule entre la station précédente et la station en cours si le temps de charge est d'au moins un tiers du temps de parcours entre la station précédente et la station en cours. La charge des super-capacités du véhicule se maintient alors avantageusement à un niveau sensiblement constant sur son trajet.

Selon une autre caractéristique de la présente invention, il est prévu en cas de panne d'une alimentation à poste fixe, un dispositif de génération d'énergie électrique complémentaire et autonome, du type groupe électrogène, embarqué à bord de certains des véhicules pour permettre une recharge des super-capacités indépendamment des dispositifs d'alimentation électrique aux stations d'arrêt.

De préférence, chaque dispositif de génération d'énergie électrique embarqué précité offre une puissance correspondant sur quelques minutes de charge à l'énergie utilisée pour parcourir une distance sensiblement plus importante que celle séparant les stations d'arrêt équipées de dispositifs fixes d'alimentation électrique.

Chaque véhicule emmagasine donc de l'énergie électrique à certaines stations d'arrêt pour la consommer lors de son parcours ultérieur. Cette solution évite la pose de caténaires ou de rails conducteurs et donc les coûts et la pollution visuelle induits. Les véhicules sont également affranchis de la nécessité d'emprunter un itinéraire fixe entre deux stations.

L'invention sera bien comprise à l'aide de la description qui suit, en référence aux dessins schématiques annexés représentant à titre d'exemple une forme de réalisation d'un réseau de transport en commun. D'autres avantages et caractéristiques seront mis en évidence à la lecture de ces dessins.
La figure 1 est une vue de deux véhicules de transport en commun à propulsion électrique se succédant sur une ligne comportant deux stations d'arrêt, l'un à l'arrêt en station, l'autre hors station.
La figure 2 est un schéma électrique simplifié du matériel électrique embarqué à bord du véhicule de transport en commun selon l'invention.
La figure 3 est un schéma électrique simplifié du matériel électrique embarqué à bord du véhicule selon l'invention.

Le passage du courant électrique est indiqué sur les schémas électriques par l'utilisation de flèches.

Le réseau de transport en commun est constitué de véhicules de transport en commun à propulsion électrique et de stations d'arrêt. On entend par station d'arrêt tout emplacement ou zone géographique où les véhicules sont susceptibles de s'arrêter que ce soit une station d'arrêt à vocation commerciale, un arrêt à simple vocation d'exploitation, un terminus ou même encore un feu tricolore sans que ces exemples soient limitatifs.

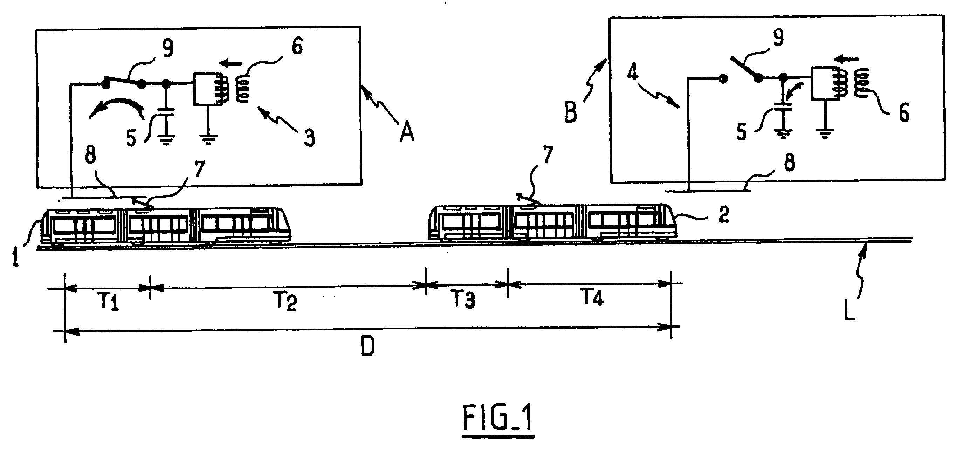

La figure 1 représente deux véhicules de transport en commun 1 et 2 à propulsion électrique se succédant sur une ligne L comportant deux stations d'arrêt A et B, le premier véhicule 1 étant à l'arrêt en station A le second 2 à l'approche de la station B. Cette figure 1 montre aussi des dispositifs d'alimentation 3 et 4 respectivement associés à chaque station A et B, le premier en décharge le second en charge, ces dispositifs étant représentés sous forme de schémas électriques simplifiés.

Toujours selon la figure 1, les dispositifs d'alimentation électrique 3 et 4 sont composés d'une super-capacité 5 alimentée en courant électrique par un réseau de distribution d'électricité ou fournisseur d'électricité 6 qui peut aussi bien être un générateur autonome de courant électrique du type groupe électrogène. Cette super-capacité 5 met sous tension électrique une caténaire 8 présente au niveau de la station lorsque l'interrupteur 9 est en position fermée.

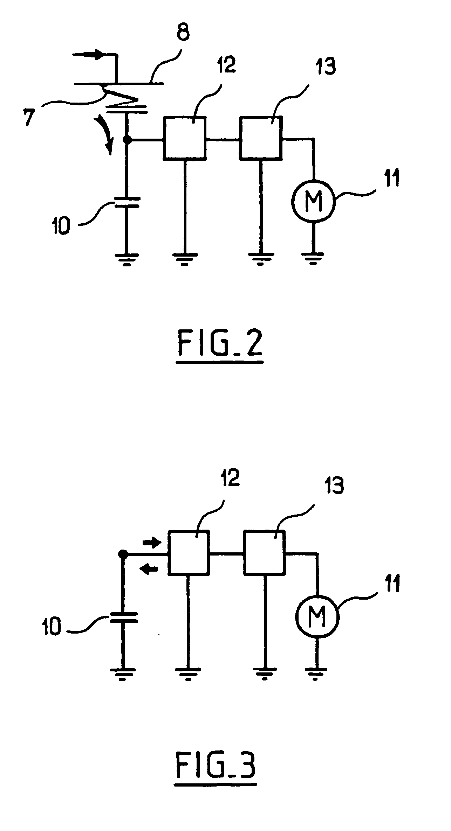

Selon les figures 2 et 3, le matériel électrique embarqué comporte une super-capacité 10 venant alimenter un moyen de propulsion électrique sous la forme d'un moteur électrique 11 noté M à travers un adaptateur de courant 12 et un onduleur 13, ces quatre éléments étant reliés à la masse.

Les moyens de coopération comprennent un organe conducteur de liaison constitué sur la figure 1 par un pantographe 7 sur le toit du véhicule en liaison électrique avec la super-capacité 10 du véhicule.

Le véhicule de transport en commun représenté sur la partie gauche de la figure 1 se situe en position immobilisée à une station d'arrêt A. La caténaire 8 sous tension se présente alors en contact électrique et physique avec le pantographe 7 pour charger la super-capacité 10 du véhicule, l'interrupteur 9 du dispositif d'alimentation 3 étant en position fermée Ainsi, la super-capacité 5 de la station se décharge dans la super-capacité 10 du véhicule qui se charge presque instantanément comme indiqué sur la figure 2.

Le véhicule 2 représenté sur la partie droite de la Figure 1 est lui en mouvement à l'approche d'une autre station d'arrêt B. Comme indiqué sur la figure 3, l'énergie électrique issue de la super-capacité 5 est alors convertie, par l'intermédiaire de l'adaptateur de courant 12 et de l'onduleur 13, en énergie de traction produite par un moteur électrique 11 noté M. L'énergie de freinage peut également être récupérée en étant transformée en énergie électrique pour charger la super-capacité 10 du véhicule également à travers l'adaptateur 12 et l'onduleur 13. Pendant ce temps, la super-capacité 5 de la station se charge en énergie électrique provenant du réseau de distribution d'électricité 6, l'interrupteur 9 du dispositif d'alimentation 4 étant en position ouverte.

On peut également prévoir un dispositif de génération d'énergie électrique complémentaire et autonome, non représenté sur les figures, du type groupe électrogène, embarqué à bord de certains véhicules qui vient alimenter la super-capacité de ces véhicules pour que ceux-ci puissent se rendre en des zones éloignées des dispositifs de rechargement au sol par exemple pour rejoindre un dépôt en dehors des aires géographiques desservies ou pour pallier le dysfonctionnement d'un dispositif d'alimentation d'une station d'arrêt. La puissance d'un tel groupe électrogène doit être environ de 50 kW ce qui donne la possibilité de charger la super-capacité du véhicule en 4 minutes.

A titre d'exemple et selon la figure 1, la charge de la super-capacité du véhicule s'effectue à la station d'arrêt sur une durée T1 d'environ 10 secondes. Cette période peut en effet avantageusement être comprise dans la durée classique d'arrêt d'un véhicule de transport en commun en ligne à une station pour le ramassage de voyageurs. Les énergies de transfert entre le dispositif d'alimentation de la station étant très élevées pendant ce temps de charge court, de l'ordre de 1200 kW pendant 10 secondes, les dimensionnements des conducteurs et du dispositif doivent être choisis en conséquence. Le type de contact en particulier caténaires / pantographes soumis à 1600 A sous 800 V doit également être convenablement dimensionné. De préférence, les caténaires ou les rails conducteurs sont en position haute et habilement confondus dans l'architecture de la station par souci de sécurité et également d'esthétisme.

En évaluant à 5 minutes l'intervalle de passage entre deux véhicules à une station donnée, la puissance de l'installation nécessaire pour recharger la super-capacité d'une station pendant ce laps de temps est avantageusement bien plus faible, de l'ordre de 40 kW.

Outre le temps d'arrêt, le temps de parcours entre deux arrêts successifs distants d'une longueur D de 500 mètres et équipés d'un dispositif de rechargement équivaut alors environ à 1 minute, composé d'une phase d'accélération T2 de 30 secondes et d'une phase de marche sans accélération T3 de 10 secondes durant lesquelles la super-capacité produit de l'énergie électrique destinée à être transformée en énergie de traction par le moteur électrique. A ces phases, succède une phase de freinage T4 de 20 secondes avant l'approche à une station, durant laquelle l'énergie de traction peut être partiellement reconvertie en énergie électrique par le moteur dans son fonctionnement en alternateur pour la recharge de la super-capacité du véhicule. Les valeurs numériques des durées T1, T2, T3 et T4 et de la longueur D sont uniquement données à titre d'exemple.

La durée de vie des super-capacités usuellement commercialisées est d'environ 300 000 cycles soit dans le cadre de l'invention de 3 ans pour les capacités embarqués et de 7 ans pour les capacités fixes.

Cette invention s'applique en particulier aux tramways sur rails ou sur pneus ou bien encore aux trolley bus.

## Revendications

1. Réseau de transport en commun constitué par :
- un ensemble de véhicules de transport en commun (1, 2) circulant sur une ou plusieurs lignes (L), lesdits véhicules (1, 2) ayant chacun au moins un moyen de propulsion électrique (11) alimenté par une batterie d'accumulateurs d'énergie électrique (10),
- des stations d'arrêt (A, B) bordant ces lignes au voisinage desquelles les véhicules de transport sont susceptibles de s'arrêter, certaines des stations (A, B) comportant un dispositif d'alimentation électrique (3, 4), chaque véhicule comportant des moyens de coopération avec le dispositif d'alimentation (3, 4) des stations d'arrêt pour la recharge totale ou partielle des accumulateurs (10),
**caractérisé en ce que** ces accumulateurs (10) sont constitués des super-capacités et **en ce que** les dispositifs d'alimentation (3, 4) comprennent une ou plusieurs super-capacités (5) alimentées par le réseau électrique (6), moyennant quoi on peut effectuer une recharge en station d'une durée sensiblement comprise dans la durée classique d'arrêt d'un véhicule de transport en commun en ligne à une station pour le ramassage de voyageurs.

2. Réseau de transport en commun selon la revendication 1, **caractérisé en ce que** les moyens de coopération comprennent au niveau des véhicules un ou plusieurs organes conducteurs de liaison (7) avec le ou les rails ou caténaires (8) places au niveau de certaines stations d'arrêt (A) et (B), ces organes conducteurs de liaison (7) étant adaptés pour entrer en contact électrique et physique avec le ou lesdits rails ou caténaires (8).

3. Réseau de transport en commun selon la revendication 2, **caractérisé en ce que** les organes conducteurs de liaison (7) appartenant aux moyens de coopération sont du type pantographe.

4. Réseau de transport en commun selon l'une des revendications précédentes, **caractérisé en ce que** chaque dispositif d'alimentation électrique (3) et (4) offre une puissance correspondant environ à l'énergie dissipée par chaque véhicule, en particulier sous forme d'énergie de traction, sur une durée d'un tiers du temps de trajet entre les deux stations d'arrêt précédentes équipées de tels dispositifs d'alimentation électrique.

5. Réseau de transport en commun selon l'une des revendications précédentes, **caractérisé en ce qu'**il est prévu un dispositif de génération d'énergie électrique complémentaire et autonome, du type groupe électrogène, embarqué à bord de certains véhicules pour permettre une recharge des super-capacités (10) indépendamment des dispositifs d'alimentation électrique aux stations d'arrêt.

6. Réseau de transport en commun selon l'une des revendications précédentes, **caractérisé en ce que** chaque dispositif de génération d'énergie électrique embarqué précité offre une puissance correspondant sur quelques minutes de charge à l'énergie utilisée pour parcourir une distance sensiblement plus importante que celle séparant les stations d'arrêt équipées de dispositifs fixes d'alimentation électrique.

## Claims

1. Public transport network comprised of:
- a set of public transport vehicles (1, 2) circulating on one or more lines (L), said vehicles (1, 2) each having at least one means of electrical propulsion (11) powered by a battery of accumulators of electrical energy (10),
- stations (A, B) bordering these lines in the Vicinity of which the transport vehicles are able to stop, with some of these stations (A, B) comprising an electric power supply device (3, 4), each vehicle comprising means of cooperating with the power supply device (3, 4) of the stations for the full or partial recharge of the accumulators (10),
**characterised in that** these accumulators (10) are comprised of super-capacitors and **in that** the power supply devices (3, 4) include one or several super-capacitors (5) powered by the electrical network (6), whereby a recharge can be carried out in the station over a duration substantially comprised within the traditional stopping time of a public transport vehicle in line at a station for collecting passengers.

2. Public transport network according to claim 1, **characterised in that** the means of cooperating include on the vehicles one or several conducting connecting members (7) with the rail or rails or catenary or catenaries (8) placed on certain stations (A) and (B), these conducting connecting members (7) being able to come into contact electrically and physically with said rail or rails or catenary or catenaries (8).

3. Public transport network according to claim 2, **characterised in that** the conducting connecting members (7) belonging to the means of cooperating are of the pantograph type.

4. Public transport network according to one of the preceding claims, **characterised in that** each electric power supply device (3) and (4) offers power corresponding approximately to the energy dissipated by each vehicle, in particular in the form of traction energy, over a duration of one-third of the transit time between the two previous stations provided with such electric power supply devices.

5. Public transport network according to one of the preceding claims, **characterised in that** it is provided with an additional and autonomous device for generating electrical energy, of the power generating type, onboard certain vehicles in order to make possible a recharge of the super-capacitors (10) independent of the electric power supply devices at the stations.

6. Public transport network according to one of the preceding claims, **characterised in that** each aforementioned onboard electrical energy generating device offers power that corresponds over a few minutes of charge to the energy used to travel a distance that is substantially greater than that separating the stations provided with fixed electric power supply devices.

## Patentansprüche

1. Öffentliches Verkehrsnetz aufgebaut aus
- einem Satz von Fahrzeugen (1, 2) für den öffentlichen Verkehr, die auf einer oder mehreren Linien (L) verkehren, wobei die Fahrzeuge (1, 2) jeweils wenigstens ein elektrisches Antriebsmittel (11) aufweisen, welches über eine Batterie von Akkumulatoren (10) elektrischer Energie gespeist ist,
- Haltestationen (A, B), welche an die Linien angrenzen und benachbart zu denen die Transportfahrzeuge anhalten können, wobei bestimmte Stationen (A, B) eine elektrische Versorgungseinrichtung (3, 4) aufweisen und jedes Fahrzeug zum vollständigen oder teilweisen Wiederaufladen der Akkumulatoren (10) Mittel zum Zusammenwirken mit der elektrischen Versorgungseinrichtung (3, 4) der Haltestationen aufweist,
**dadurch gekennzeichnet, dass** die Akkumulatoren (10) aus Superkapazitoren aufgebaut sind und dass die Versorgungseinrichtungen (3, 4) einen oder mehrere Superkapazitoren (5) umfassen, die aus dem elektrischen Netz (6) gespeist sind, womit ein Wiederaufladen in der Station mit einer Dauer erzielbar ist, die im Wesentlichen innerhalb der herkömmlichen Haltedauer eines Fahrzeugs des öffentlichen Verkehrs zur Aufnahme von Passagieren im Linienbetrieb an einer Station liegt.

2. Öffentliches Verkehrsnetz nach Anspruch 1, **dadurch gekennzeichnet, dass** die Mittel zum Zusammenwirken im Bereich des Fahrzeugs ein oder mehrere leitfähige Verbindungsorgane (7) mit der oder den Schienen oder Oberleitungen (8) umfassen, welche im Bereich bestimmter Haltestationen (A) und (B) angeordnet sind, wobei die leitfähigen Verbindungsorgane (7) dazu ausgebildet sind, in elektrischen und physischen Kontakt mit den Schienen oder Oberleitungen (8) zu treten.

3. Öffentliches Verkehrsnetz nach Anspruch 2, **dadurch gekennzeichnet, dass** die zu denen Mitteln zum Zusammenwirken gehörenden leitfähigen Verbindungsorgane (7) nach Art eines Pantographen ausgebildet sind.

4. Öffentliches Verkehrsnetz nach einem der vorhergehenden Ansprüche, **dadurch gekennzeichnet, dass** jede elektrische Versorgungseinrichtung (3) und (4) eine Leistung aufweist, die etwa der Energie entspricht, welche jedes Fahrzeug, insbesondere in Form von Traktionsenergie, während einer Dauer verbraucht, die einem Drittel der Fahrzeit zwischen zwei vorangegangenen Haltestationen entspricht, die mit solchen elektrischen Versorgungseinrichtungen ausgerüstet sind.

5. Öffentliches Verkehrsnetz nach einem der vorhergehenden Ansprüche, **dadurch gekennzeichnet, dass** eine komplementäre und autonome Vorrichtung zur Erzeugung elektrischer Energie nach Art eines Generatoraggregats an Bord bestimmter Fahrzeuge vorgesehen ist, um ein von den elektrischen Versorgungseinrichtungen an den Haltestationen unabhängiges Wiederaufladen der Superkapazitoren (10) zu ermöglichen.

6. Öffentliches Verkehrsnetz nach einem der vorhergehenden Ansprüche, **dadurch gekennzeichnet, dass** jede der vorgenannten fahrzeugseitigen Vorrichtungen zur Erzeugung elektrischer Energie eine Leistung aufweist, die nach einigen Minuten Ladezeit der Energie entspricht, welche verwendet wird, um eine Distanz zurückzulegen, die im Wesentlichen größer ist als diejenige, welche die Haltestationen mit fest installierten elektrischen Versorgungseinrichtungen trennt.
